# EUROPÄISCHE PATENTSCHRIFT

(11) **EP 1 116 286 B1**
(45) Veröffentlichungstag und Bekanntmachung des Hinweises auf die Patenterteilung: **23.06.2004**
(21) Anmeldenummer: 99941548.2
(22) Anmeldetag: 09.08.1999
(51) Int. Cl.: H01M 4/22, H01M 10/44

(54) **VORRICHTUNG ZUM FORMIEREN EINER MEHRZAHL VON ZU EINER GRUPPE ZUSAMMENGEFASSTEN AKKUMULATOREN**
DEVICE FOR FORMING A PLURALITY OF ACCUMULATORS THAT ARE COMBINED TO FORM A GROUP
DISPOSITIF POUR FORMER UNE PLURALITE D'ACCUMULATEURS REUNIS DE MANIERE A CONSTITUER UN GROUPE

(30) Priorität: 18.08.1998 DE 19837449
(43) Veröffentlichungstag der Anmeldung: 18.07.2001
(73) Patentinhaber: CMW Automation GmbH, 65594 Runkel-Ennerich (DE)
(72) Erfinder: WIPPERFÜRTH, Walter, D-65232 Taunusstein-Hambach (DE); ROMPEL, Markus, D-65551 Limburg-Lindenholzhausen (DE); OHL, Thomas, D-65510 Hünstetten-Wallrabenstein (DE); ROMPEL, Frank, D-65549 Limburg (DE); LAMBERT, Horst, D-65532 Taunusstein-Hambach (DE); WALA, Eduard, D-65510 Idstein-Wörsdorf (DE)
(74) Vertreter: Müller, Eckhard, Dr.
(86) Internationale Anmeldenummer: PCT/EP1999/005764
(87) Internationale Veröffentlichungsnummer: WO 2000/011729

(56) Entgegenhaltungen:
- EP-A- 0 406 464
- GB-A- 153 687
- US-A- 4 290 444

## Beschreibung

Die Erfindung betrifft eine Vorrichtung zum Formieren einer Mehrzahl von zu einer Gruppe zusammengefaßten, auf einem Tragelement positionierten Akkumulatoren, insbesondere Akkumulatoren für Kraftfahrzeuge, deren Pole an einer oberen Gehäusewand angeordnet sind mit einem als Platte, Rahmen, Gitter, Leiste ausgebildeten flächigen Bauelement, an dem eine Mehrzahl von mit den Polen der Akkumulatoren korrespondierenden Polkontakten angeordnet sind, die in Art einer Matrix in Reihen und Spalten an dem Bauelement positioniert sind, wobei die Polkontakte über an dem Bauelement befestigte, elektrische Leitungselemente mit einem zentralen elektrischen Versorgungsanschluß des Bauelements in Verbindung stehen und zum Formieren der Akkumulatoren das Bauelement mit den Polkontakten den Polen der Gruppe von Akkumulatoren zur Herstellung einer leitenden Verbindung zwischen Polkontakten und Polen auflegbar oder aufsetzbar ist.

Nach der Herstellung derartiger Akkumulatoren bzw. Batterien werden diese durch die Einfüllöffnungen mit Säure befüllt und anschließend erstmalig geladen. Dieser Vorgang des Ladens von in einer Gruppe zusammengefaßten Akkumulatoren wird auch als Formieren bezeichnet.

Bislang werden diese Akkumulatoren nach dem Befüllen mit Säure in Gruppen von bspw. 15 bis 25 Stück zusammengestellt und die Pole der einzelnen Batterien über einzelne, individuelle Polkabel manuell mit der Ladevorrichtung verbunden. Weiterhin werden die Einfüllöffnungen der Batterien mit sogenannten Entgasungselementen bestückt, welche zwar ein Entweichen von Gas zulassen, jedoch Flüssigkeiten zurückhalten. Nachteilig hieran ist jedoch, daß die Vorbereitung der Akkumulatoren zum Formieren mit einem erheblichen zeitlichen und manuellen Aufwand verbunden ist.

Eine Vorrichtung mit der eingangs genannten Art ist bereits aus der EP 0 406 464 A1 bekannt. Dort ist eine Vorrichtung zum Formieren einer Mehrzahl von zu einer Gruppe zusammengefaßten, auf einem Tragelement positionierten Akkumulatoren beschrieben, deren Pole an einer oberen Gehäusewand angeordnet sind. Ein als Platte ausgebildetes flächiges Trageelement weist Polkontakte auf, mit denen durch Aufsetzen des Bauelementes die Batterien mit einem zentralen elektrischen Anschluß ohne manuelle Einzelverbindung verbunden werden.

Aus der GB 153687 ist eine Lade- beziehungsweise Entladevorrichtung für mehrere Batterien bekannt, wobei Federkontakte vorgesehen sind, die eine durch einen fehlenden Akkumulator vorhandene Lücke automatisch elektrisch überbrücken, so daß dennoch ein geschlossener Stromkreis für die restlichen Akkumulatoren zur Verfügung gestellt ist.

Aus der DE 37 44 606 A1 ist bereits eine Einrichtung zum Formieren mit den eingangs genannten Merkmalen bekannt. Diese Einrichtung enthält eine mit den Akkumulatoren elektrisch verbundene Lade- und Entladeeinheit sowie Mittel zum Einfüllen des Elektrolyten, einen mit den Akkumulatoren kommunizierenden Abscheider für Elektrolyt und Gase, Mittel zur Erzeugung der Evakuierungsperiodizität und eine Evakuierungseinheit, die sukzessive miteinander kommunizieren. Mit dem Abscheider für Elektrolyt und Gase und mit jedem Akkumulator steht ein Elektrolytverteilungsmittel in Strömungsverbindung, das mit einem Drehelement mechanisch verbunden ist. Die Akkumulatoren sind elektrisch miteinander verbunden und auf einem Tragrahmen eines Elektrolytverteilungsmittels angeordnet. An den ersten und den letzten der sukzessiv verbundenen Akkumulatoren ist eine Lade- und Entladeeinheit angeschlossen.

Aus der DE-OS 26 18 748 ist ein transportabler Ladeständer für die Aufnahme einer Mehrzahl von elektronischen Taschenrechnern bekannt. Der Ladeständer hat die Form einer oben offenen flachen Wanne, in deren Innerem durch an ihren Längsseiten einander paarweise gegenüberstehend nach innen gerichtete Vorsprünge eine der Anzahl der aufzunehmenden Taschenrechner entsprechende Anzahl von Abteilen für die Aufnahme jeweils eines der Taschenrechner ausgebildet ist. Die Aufnahme ist jeweils so bemessen, daß der zugeordnete Taschenrechner nach seinem Einführen in das jeweilige Abteil unter Verbindung seines Steckanschlusses mit dem in diesem Abteil vorgesehenen Ladeanschluß im Inneren der Wanne sicher gehalten ist, aber frei zugänglich über deren Oberkante hinausragt.

Demgegenüber liegt der Erfindung die Aufgabe zugrunde, eine Vorrichtung der eingangs genannten Art dahingehend weiterzubilden, daß die Formierung von Akkumulatoren unterschiedlicher Größe vereinfacht wird.

Diese Aufgabe wird bei der Vorrichtung mit den eingangs genannten Merkmalen im wesentlichen dadurch gelöst, daß das Bauelement aus einem Rahmen mit daran angeordneten Querstreben und/oder Längsstreben besteht und der Abstand der Reihen und/oder Spalten solche Werte aufweist, daß die Polkontakte mit den Polen von Akkumulatorgruppen unterschiedlicher Baugröße, ggf. unter modifizierter Gruppierung der Akkumulatoren kontaktierbar sind.

Aufgrund dieser Maßnahme wird nicht nur die Vorbereitung zum Formieren der Akkumulatoren erheblich vereinfacht, da das Bauelement durch einfaches Auflegen auf die Gruppe von Akkumulatoren in einem einzigen Arbeitsgang die Herstellung einer elektrischen Verbindung zwischen der Ladevorrichtung und sämtlichen Akkumulatoren ermöglicht. Auch ist die Voraussetzung dafür geschaffen, daß die Polkontakte in der Baugröße der Akkumulatoren bzw. der Positionierung der Pole der Akkumulatoren angepaßter Form an dem Bauelement befestigt werden können. Die Polkontakte sind in Art einer Matrix in Reihen und Spalten an dem Bauelement positioniert, wobei der Abstand der Reihen und/oder Spalten solche Werte aufweist, daß die Polkontakte mit den Polen von Akkumulatorgruppen unterschiedlicher Baugröße, ggf. unter modifizierter Gruppierung der Akkumulatoren innerhalb der Gruppe, kontaktierbar sind. Hierdurch ist die Möglichkeit gegeben, mit ein und demselben Bauelement Gruppen von Akkumulatoren unterschiedlicher Baugröße zu formieren.

Von besonderem Vorteil weist das Bauelement nach einer ersten Ausgestaltung der Erfindung ein oder mehrere, insbesondere an den Quer- oder Längsstreben befestigte Entgasungselemente, insbesondere eine Gewebestruktur oder eine semipermeable Membran oder dgl. auf, die den Einfüllöffnungen des Akkumulators zugeordnet ist. Somit legen sich die Entgasungselemente bei Auflegen des Bauelements auf die Gruppe von Akkumulatoren unter Kontaktierung der Polkontakte mit den Polen selbsttätig über die Einfüllöffnungen der Akkumulatoren, so daß eine individuelle Bestückung der Akkumulatoren mit Entgasungselementen nicht mehr erforderlich ist.

Nach einer anderen vorteilhaften Ausgestaltung der Erfindung weist das Bauelement ein Entgasungslabyrinth zur Rückführung des Kondensats auf.

Weiterhin hat es sich als vorteilhaft erwiesen, daß an oder in dem Bauelement Sensoren, z.B. Temperaturfühler oder dgl., zur Überwachung des Ladevorganges der Akkumulatoren angeordnet sind.

Von Vorteil sind die Polkontakte im wesentlichen vertikal verschiebbar an dem Bauelement befestigt, so daß geringe Höhentoleranzen in der Positionierung der Pole der Akkumulatoren selbsttätig ausgeglichen werden und für eine sichere elektrische Verbindung zwischen den Polkontakten und den Polen der Akkumulatoren gesorgt ist.

Hierzu bietet es sich an, daß der Polkontakt mit der Vorspannung einer Feder beaufschlagt ist, wobei die Federvorspannung den Polkontakt auf den Pol zu zu verschieben trachtet, um für einen sicheren Sitz des Polkontakts auf dem Pol zu sorgen.

Nach einer weiteren, besonders vorteilhaften und eigenständigen Ausgestaltung der Erfindung, die auch unabhängig von dem Bauelement für jeden anderen Polkontakt Anwendung findet, ist der Polkontakt als zwei oder mehrere Zangenelemente bzw. Hülsenelement aufweisende Kontaktzange ausgebildet, wodurch eine elektrisch gute Kontaktierung zwischen dem Polkontakt und dem entsprechenden Pol gesorgt wird.

Von besonderem Vorteil sind die Zangenelemente mittels einer Schrägführung am Bauelement bzw. einem sonstigen Bauteil geführt.

Die Schrägführung weist eine öffnungsschräge und/oder eine Schließschräge auf, so daß die Kontaktzange zwangsgeführt in Abhängigkeit von der insbesondere vertikalen Positionierung des Bauelementes oder eines sonstigen Elementes in die Öffnungs- oder Schließstellung überführt wird.

Besonders vorteilhaft ist die Handhabung der Vorrichtung in Kombination mit einem Tragelement, wie einer Palette, Rungenpalette, Rollband oder dgl., auf dem die Gruppe von Akkumulatoren positionierbar ist.

Das Tragelement weist von Vorteil Positionierhilfen für die Gruppen von Akkumulatoren auf, wobei diese Positionierhilfen ggf. mit der Akkumulatorbaugröße variieren.

Von besonderem Vorteil ist das Bauelement bspw. über ein Scharnier oder dgl. schwenkvorrichtung schwenkbar dem Tragelement angelenkt. Nach dem Positionieren der Gruppe von Akkumulatoren auf dem Tragelement, wobei die individuelle Positionierung bspw. von der Baugröße der Akkumulatoren abhängt, wird das Bauelement zur Vorbereitung des Formierens einfach auf die Gruppe von Akkumulatoren geschwenkt, wobei sich die Polkontakte selbsttätig den Polen der Akkumulatoren anlegen und gleichzeitig die Entgasungselemente die Einfüllöffnungen der Akkumulatoren gegen Austritt von Flüssigkeiten verschließen.

Dadurch, daß das der Gruppe von Akkumulatoren aufliegende Bauelement mit dem Tragelement über Halteelemente, Verriegelungselemente oder dgl. verbindbar ist, wird die Gruppe von zu Formierenden Akkumulatoren mechanisch zusammengehalten und kann im Verbund ohne weiteres transportiert werden. Insgesamt wird durch diese Maßnahme ein fester, eigenständig handhabbarer Verbund bestehend aus dem Tragelement, der Gruppe von Akkumulatoren und dem Bauelement geschaffen.

Weiterhin hat es sich als vorteilhaft erwiesen, daß das Tragelement vertikale Rahmenteile zum Stapeln mehrere Tragelemente übereinander aufweist, wobei das Bauelement bevorzugt an dem Rahmenteil angelenkt oder mit diesem verriegelt, verspannt oder in ähnlicher Form lösbar befestigt ist. Aufgrund dieser Maßnahme können mehrere solcher Verbunde bestehend aus Tragelement, Gruppe von Akkumulatoren und Bauelement bspw. platzsparend zum Formieren übereinander gestapelt werden.

Weitere Vorteile und Anwendungsmöglichkeiten der vorliegenden Erfindung ergeben sich aus der nachfolgenden Beschreibung der Ausführungsbeispiele anhand der Figuren.

Es zeigen:
- Figur 1: ein erstes Ausführungsbeispiel der erfindungsgemäßen Vorrichtung in perspektivischer, schematischer Darstellung,
- Figur 2: ein zweites Ausführungsbeispiel der erfindungsgemäßen Vorrichtung in perspektivischer, schematischer Darstellung,
- Figur 3: ein drittes Ausführungsbeispiel der erfindungsgemäßen Vorrichtung in Seitenansicht und teilweise geschnitten, wobei das Bauelement von dem Tragelement nach oben geschwenkt ist,
- Figur 4: das Ausführungsbeispiel der Figur 3 mit auf die Gruppe von Akkumulatoren geschwenktem Bauelement in Seitenansicht,
- Figur 5: die Vorrichtung gemäß Figur 3 in einer Vorderansicht,
- Figur 6: die Vorrichtung gemäß Figur 3 in Draufsicht,
- Figur 7: mehrere Vorrichtungen gemäß Figur 3 übereinandergestapelt,
- Figur 8: die Gruppierung der Akkumulatoren auf dem Tragelement, wobei die Akkumulatoren eine Gehäuselänge von 350 mm aufweisen,
- Figur 9: die Gruppierung der Akkumulatoren auf dem Tragelement, wobei die Akkumulatoren eine Gehäuselänge von 200 mm aufweisen,
- Figur 10: die Gruppierung der Akkumulatoren auf dem Tragelement, wobei die Akkumulatoren eine Gehäuselänge von 275 mm aufweisen,
- Figur 11: die Gruppierung der Akkumulatoren auf dem Tragelement, wobei die Akkumulatoren eine Gehäuselänge von 240 mm aufweisen und
- Figur 12: Details der Ausbildung der Polkontakte als Kontaktzange in Schnittdarstellung.

Die in den Figuren dargestellte Vorrichtung 10 zum Formieren einer Mehrzahl von zu einer Gruppe 12 zusammengefaßten, im wesentlichen in einer Ebene positionierten Akkumulatoren 14, insbesondere Akkumulatoren für Kraftfahrzeuge, deren Pole 16, 18 bevorzugt an einer oberen Gehäusewand 20 angeordnet sind, weist ein als Platte, Rahmen, Gitter, Leiste oder dgl. ausgebildetes flächiges Bauelement 22 auf. An dem Bauelement 22 sind eine Mehrzahl von mit den Polen 16 der Akkumulatoren 14 korrespondierenden Polkontakten 24, 26 angeordnet. Die Polkontakte 24, 26 stehen mit einem zentralen elektrischen Versorgungsanschluß 32, der insbesondere einen Plusanschluß 34 und einen Minusanschluß 36 besitzt, über an dem Bauelement 22 befestigte elektrische Leitungselemente 28, 30 in Verbindung.

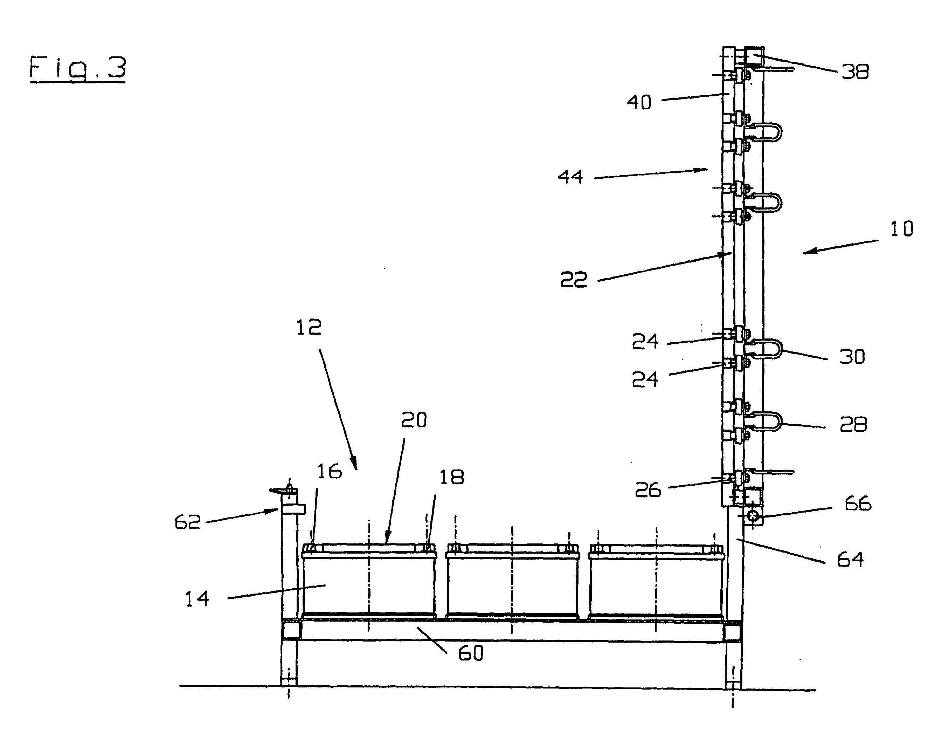

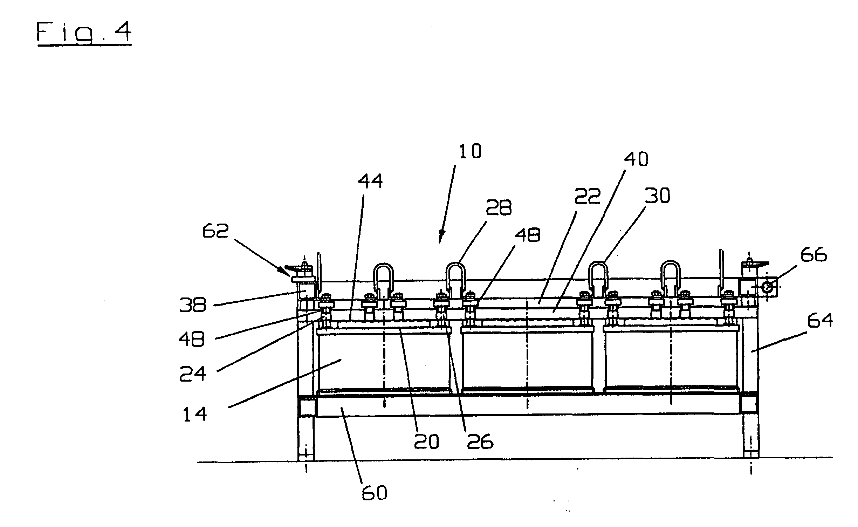

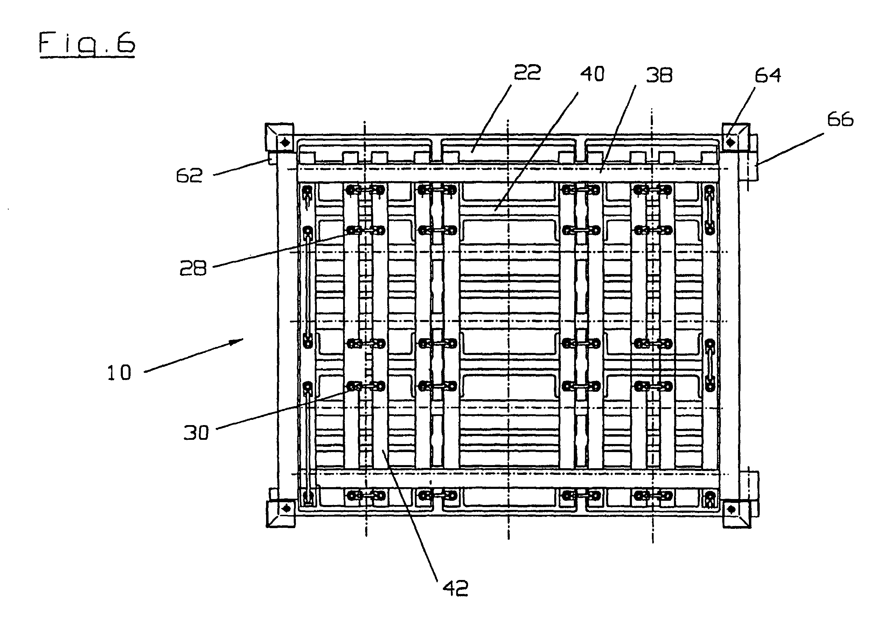

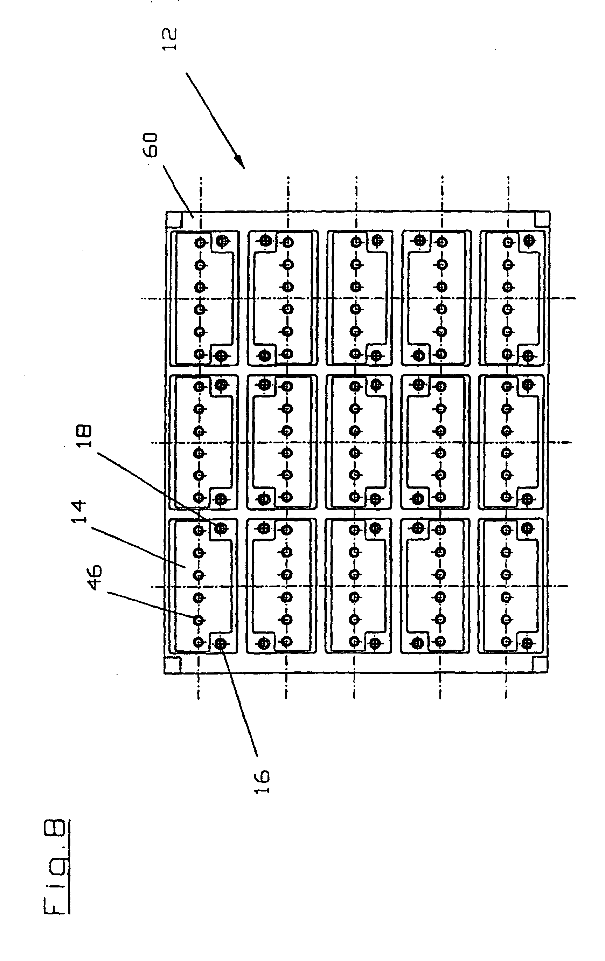

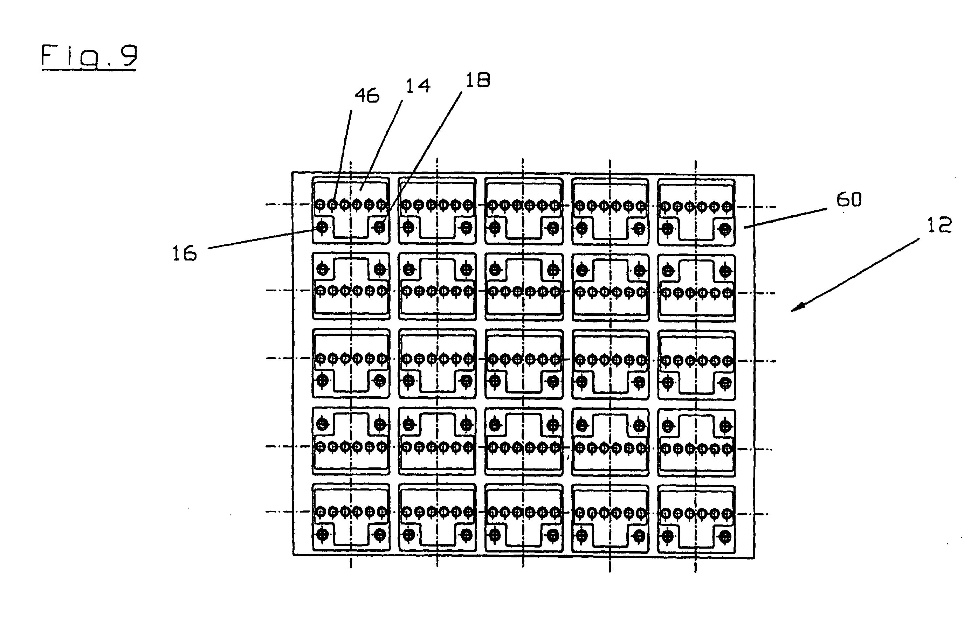

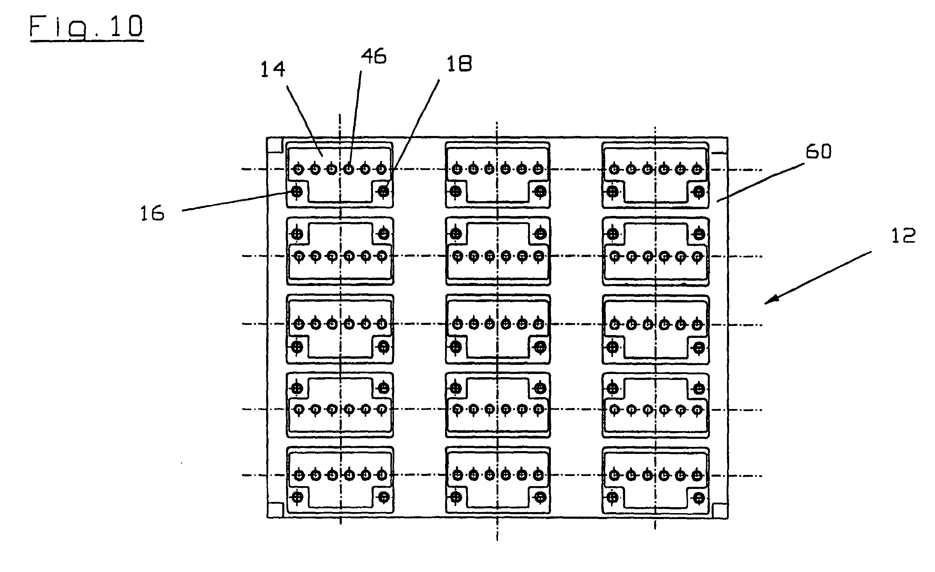

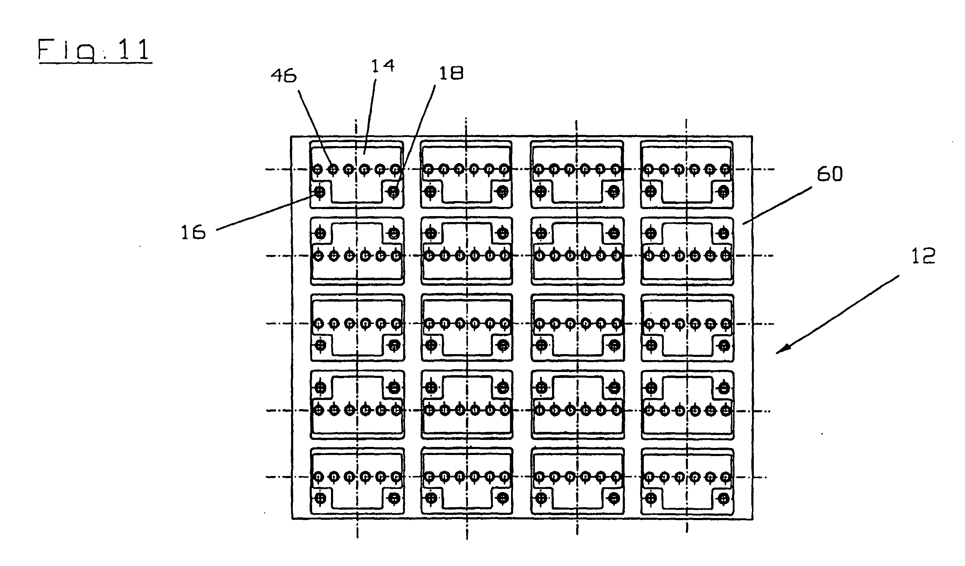

Das Bauelement 22 besteht aus einem Rahmen 38 mit daran angeordneten Querstreben 40 und/oder Längsstreben 42. Die Polkontakte 24, 26 sind in Art einer Matrix in Reihen und Spalten an der Unterseite des Bauelements 12 positioniert. Der Abstand der Reihen und/oder Spalten weist solche Werte auf, daß die Polkontakte 24, 26 mit den Polen 16, 18 von Akkumulatorgruppen unterschiedlicher Baugröße, ggf. unter modifizierter Gruppierung der Akkumulatoren 14, kontaktierbar sind. In den Figuren 8 bis 11 sind verschiedene Gruppierungen der Akkumulatoren 14 unterschiedlicher Baugröße wiedergegeben, die sämtlich mit dem in den Figuren 3 bis 6 dargestellten Bauelement 22 formierbar sind. Die Baugrößen der Akkumulatoren der Figuren 8 bis 11 liegen bei einer Gehäuselänge von 200 mm, 240 mm, 275 mm und 350 mm.

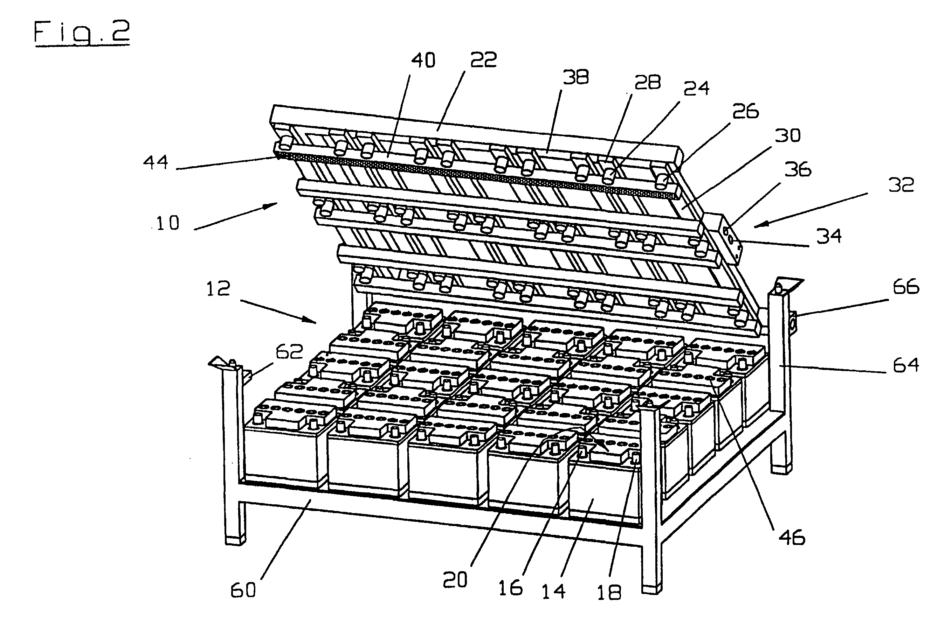

Wie insbesondere in Figur 2, 4 und 5 durch Punktierungen angedeutet, weist das Bauelement 22 ein oder mehrere, insbesondere an den Querstreben 40 oder Längsstreben 42 befestigte Entgasungselemente 44 auf. Diese Entgasungselemente können als Gewebestruktur, poröses Material oder auch als semipermeable Membran oder dgl. ausgebildet sein. Wesentlich ist, daß das Entgasungselement 44 einen Austritt von Gas aus dem Akkumulator 14 ermöglicht, ein Austreten von Flüssigkeit jedoch verhindert. Dadurch, daß das Entgasungselement 44 an einer Querstrebe 40 oder einer Längsstrebe 42 befestigt ist, legt sich das Entgasungselement 44 bei entsprechender Positionierung der Akkumulatoren 14 selbsttätig vor die Einfüllöffnungen 46. Von Vorteil weist das Bauelement 22 des weiteren ein Entgasungslabyrinth auf, welches der Rückführung des Kondensats dient. Es besteht des weiteren auch die Möglichkeit, an oder in dem Bauelement 22 Sensoren, z.B. Temperaturfühler oder dgl. zur Überwachung des Ladevorgangs der Akkumulatoren 14 anzubringen.

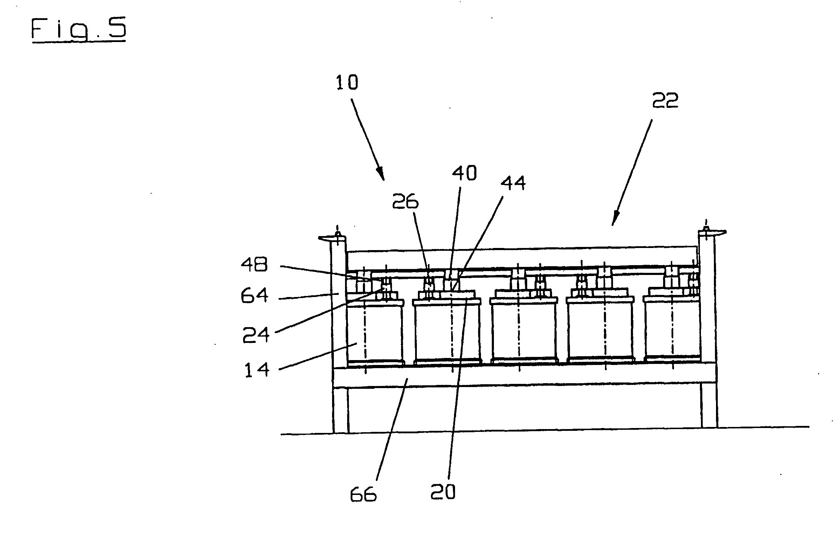

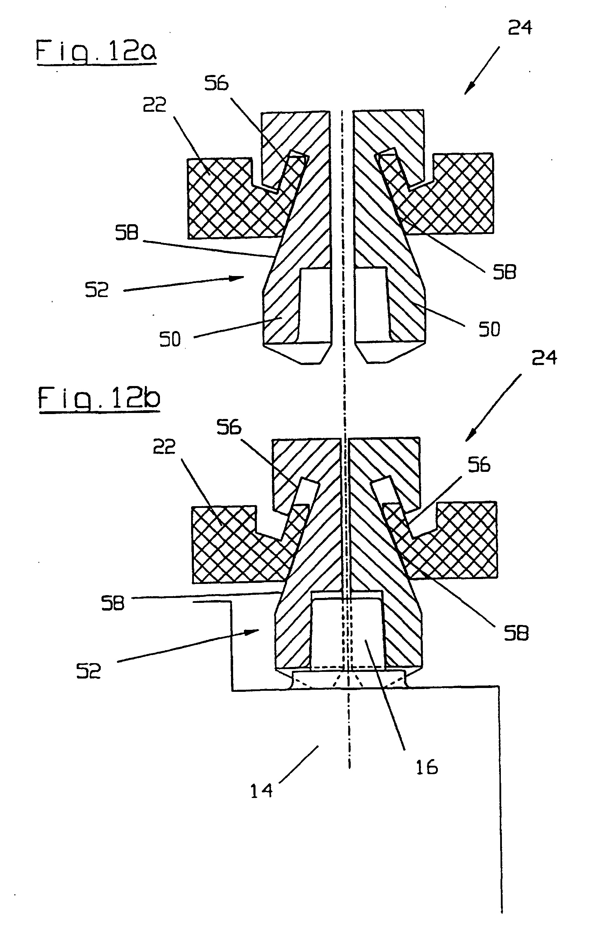

Die Polkontakte 24, 26 sind, wie insbesondere aus den Figuren 5 und 12 entnehmbar ist, vertikal verschiebbar an dem Bauelement 22 befestigt, wodurch gewisse Toleranzen bzgl. der vertikalen Positionierung der Polkontakte 24, 26 bzw. Pole 16, 18 ausgeglichen werden können. Gemäß der Ausführungsform der Figur 5 sind die Polkontakte 24, 26 mit der Vorspannung einer Feder 48 beaufschlagt, die die Polkontakte 24, 26 in Richtung auf die zugehörigen Pole 16, 18 zu verschieben sucht.

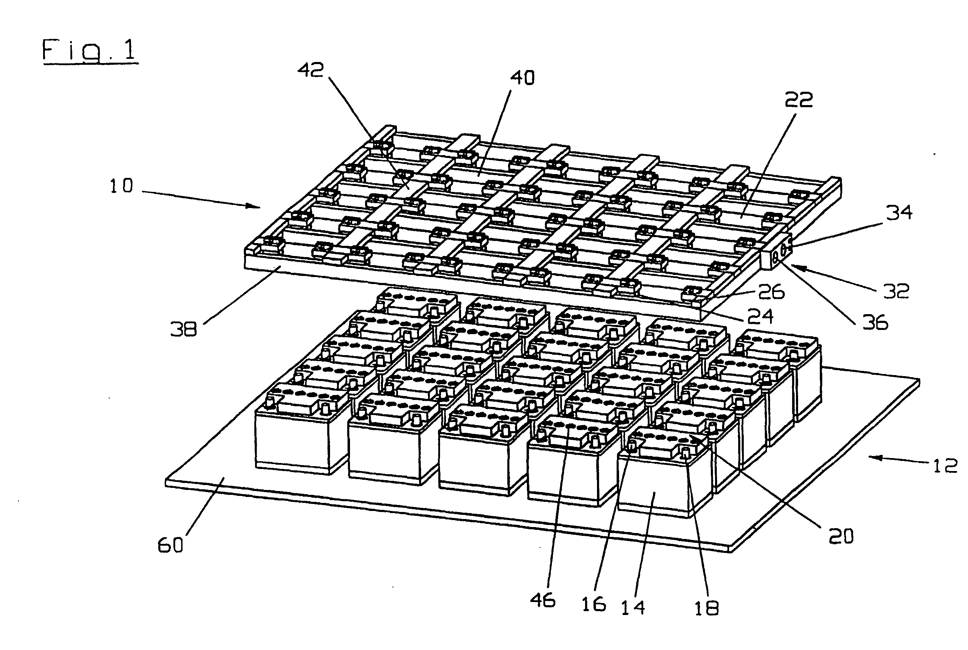

Gemäß dem Ausführungsbeispiel der Figur 12 sind die Polkontakte 24, 26 als zwei oder mehrere Zangenelemente 50 aufweisende Kontaktzangen 52 ausgebildet. Die Kontaktzangen 52 besitzen an ihrem unteren, die Pole 16, 18 umfassenden Abschnitt eine Art Hülsenform. Die Zangenelemente 50 sind mittels einer Schrägführung 54 am Bauelement 22 oder einem sonstigen Element, bspw. einem Flansch geführt. Die Schrägführung 54 weist eine Öffnungsschräge 56 sowie eine Schließschräge 58 auf, so daß die Kontaktzange 52 zwangsgeführt in Abhängigkeit von der vertikalen Positionierung des Bauelementes 22 in die Öffnungs- oder Schließstellung überführt wird. In Figur 12 a ist die Kontaktzange 52 in der Öffnungsstellung der Zangenelemente 50 dargestellt, wobei die Zangenelemente 50 selbsttätig bei nicht auf die Gruppe 12 von Akkumulatoren 14 aufgelegtem Bauelement 22 überführt werden. Dies ist bedingt durch die Öffnungsschräge 56, welche die Zangenelemente 50 bei abgehobenem Bauelement 22 aufgrund bspw. der Wirkung der Schwerkraft selbsttätig in die Öffnungsstellung überführt. Wird hingegen das Bauelement 22 auf die Gruppe 12 von Akkumulatoren 14 aufgesetzt oder aufgelegt, kommen die freien Enden der Zangenelemente 50 in Berührung mit der oberen Gehäusewand 20 der Akkumulatoren 14 und werden relativ zu dem Bauelement 22 bzw. dem die Schrägführung 54 aufweisenden Bauteil angehoben bzw. nach oben gedrückt. Durch die Schließschräge 58 werden dann die Zangenelemente 50 radial nach innen aufeinander zu bewegt, so daß sie den Pol 16, 18 des Akkumulators 14 fest umschließen, und ein einwandfreier elektrischer Kontakt gewährleistet ist. Die Profilierung der Kontaktzange 52 bzw. der Zangenelemente 50 ist derart gewählt, daß sowohl der Pluspol als auch der Minuspol des Akkumulators 14 sicher umfaßt werden und ein guter elektrischer Kontakt gegeben ist. Die Gruppe 12 von Akkumulatoren 14 ist, wie bspw. in den Figuren 1 und 2 dargestellt, auf einem Tragelement 16, z.B. einer Palette, einer Rungenpalette, einem Rollband oder dgl. positioniert. Dieses Tragelement 60 kann Positionierhilfen für die Gruppen 12 von Akkumulatoren 14 aufweisen, wobei die Positionierhilfen ggf. mit der Akkumulatorbaugröße variieren, wie dies aus der Anordnung der Gruppen 12 von Akkumulatoren 14 gemäß den Figuren 8 bis 11 ersichtlich ist.

Während gemäß Figur 1 das Bauelement 22 auf die Gruppe 12 von Akkumulatoren 14 einfach von oben bspw. mittels eines Roboters auflegbar ist, ist das Bauelement 22 gemäß dem Ausführungsbeispiel der Figur 2 bspw. über ein Scharnier 66 schwenkbar an dem Tragelement 60 angelenkt. Das Ausführungsbeispiel der Figur 2 hat sicherlich den Vorteil, daß die Positionierung des Bauelements 22 auf der Gruppe 12 der Akkumulatoren 14 sehr gut reproduzierbar ist.

In jedem Fall, sei es nun bei dem Ausführungsbeispiel der Figur 1 oder dem der Figur 2, ist das der Gruppe 12 der Akkumulatoren 14 aufliegende Bauelement 22 mit dem Tragelement 60 über Halteelemente, Verriegelungselemente 62 oder dgl. verbindbar, so daß ein eigenständig handhabbarer Verbund aus Tragelement 60, Gruppe 12 von Akkumulatoren 14 und Bauelement 22 gebildet ist.

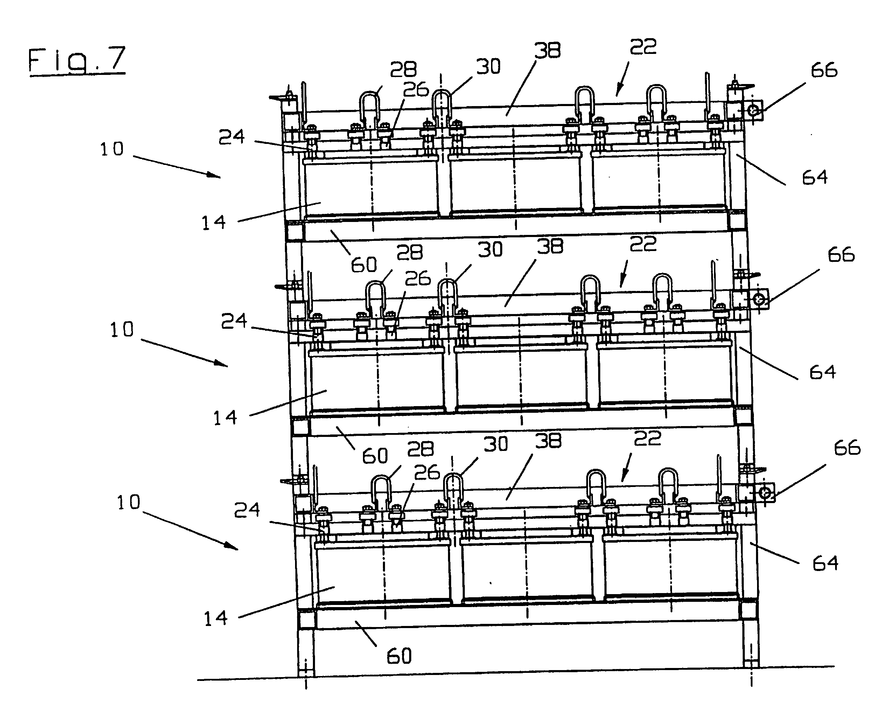

Gemäß Figur 7 weist das Tragelement 60 vertikale Rahmenteile 64 zum Stapeln mehrerer Tragelemente 60 auf. Insbesondere ist das Bauelement 22 dem Rahmenteil 64 angelenkt oder mit diesem verriegelt, verspannt oder in ähnlicher Form lösbar verbunden.

Der Vorteil der verschiedenen Ausführungsformen der erfindungsgemäßen Vorrichtung besteht u.a. darin, daß ein manuelles Verkabeln der einzelnen Akkumulatoren 14 zum Formieren entfällt. Insoweit ist ein einfaches bzw. selbsttätiges Verbinden der Akkumulatoren 14 der Gruppe 12 mit der Ladevorrichtung möglich. Weiterhin kann eine individuell aufbringbare Abdeckung für die Einfüllöffnung 46 der Akkumulatoren 14 entfallen, da das Bauelement 22 integrierte Entgasungselemente 44 aufweist. Die Akkumulatoren können in größeren Gruppen zur Ladestation bzw. Ladevorrichtung transportiert werden, da ein Tragelement, die Gruppe 12 von Akkumulatoren 14 und das Bauelement 22 einen eigenständig handhabbaren Verbund bilden. Auch entfällt nach Durchführung des Formierens der Akkumulatoren 14 ein manuelles Entkabeln. Das Laden bzw. Formieren der Akkumulatoren 14 erfolgt äußerst umweltfreundlich, da das Kondensat von den Entgasungselementen 44 bzw. dem Entgasungslabyrinth rückgeführt wird und allenfalls während des Formierens geringe Gasmengen durch das Entgasungselement 44 austreten. Hierdurch ist auch eine nur geringe Nachfüllung von Säure nach dem Formieren der Akkumulatoren 14 erforderlich. Die Vorrichtung ist äußerst flexibel und bei allen gängigen Formationsanlagen nachrüstbar, so bspw. bei Akkumulatoren auf Paletten für Regalstaplung, auf Rungenpaletten, welche aufeinander stapelbar sind, auf Rollenbändern bzw. Rollenbändern im Wassertank oder auch auf Wasserträgern für Regalstaplung.

### Bezugszeichenliste

- 10: Vorrichtung
- 12: Gruppe
- 14: Akkumulator
- 16: Pol
- 18: Pol
- 20: Obere Gehäusewand
- 22: Bandelement
- 24: Polkontakt
- 26: Polkontakt
- 28: Leitungselement
- 30: Leitungselement
- 32: Elektr. Versorgungsanschluß
- 34: Plusanschluß
- 36: Minusanschluß
- 38: Rahmen
- 40: Querstrebe
- 42: Längsstrebe
- 44: Entgasungselement
- 46: Einfüllöffnung
- 48: Feder
- 50: Zangenelement
- 52: Kontaktzange
- 54: Schrägführung
- 56: Öffnungsschräge
- 58: Schließschräge
- 60: Tragelement
- 62: Verriegelungselement
- 64: Rahnenteil
- 66: Scharnier

## Patentansprüche

1. Vorrichtung (10) zum Formieren einer Mehrzahl von zu einer Gruppe (12) zusammengefaßten, auf einem Tragelement (60) positionierten Akkumulatoren (14), insbesondere Akkumulatoren für Kraftfahrzeuge, deren Pole (16, 18) an einer oberen Gehäusewand (20) angeordnet sind mit einem als Platte, Rahmen, Gitter, Leiste ausgebildeten flächigen Bauelement (22), an dem eine Mehrzahl von mit den Polen (16) der Akkumulatoren (14) korrespondierenden Polkontakten (24, 26) angeordnet sind, die in Art einer Matrix in Reihen und Spalten an dem Bauelement (22) positioniert sind, wobei die Polkontakte (24, 26) über an dem Bauelement (22) befestigte, elektrische Leitungselemente (28, 30) mit einem zentralen elektrischen Versorgungsanschluß (32) des Bauelements (22) in Verbindung stehen und zum Formieren der Akkumulatoren (14) das Bauelement (22) mit den Polkontakten (24, 26) den Polen (16, 18) der Gruppe (12) von Akkumulatoren (14) zur Herstellung einer leitenden Verbindung zwischen Polkontakten (24, 26) und Polen (16, 18) auflegbar oder aufsetzbar ist, **dadurch gekennzeichnet, daß** das Bauelement (22) aus einem Rahmen (38) mit daran angeordneten Querstreben (40) und/oder Längsstreben (42) besteht und der Abstand der Reihen und/oder Spalten solche Werte aufweist, daß die Polkontakte (24, 26) mit den Polen (16, 18) von Akkumulatorgruppen unterschiedlicher Baugröße, ggf. unter modifizierter Gruppierung der Akkumulatoren (14) kontaktierbar sind.

2. Vorrichtung nach Anspruch 1, **dadurch gekennzeichnet, daß** das Bauelement (22) ein oder mehrere, insbesondere an den Querstreben (40) oder Längsstreben (42) befestigte Entgasungselemente (44), insbesondere eine Gewebestruktur oder eine semipermeable Membran aufweist, die den Einfüllöffnungen (46) der Akkumulatoren (14) zugeordnet sind.

3. Vorrichtung nach einem der vorhergehenden Ansprüche, **dadurch gekennzeichnet, daß** das Bauelement (22) ein Entgasungslabyrinth zur Rückführung des Kondensats aufweist.

4. Vorrichtung nach einem der vorhergehenden Ansprüche, **dadurch gekennzeichnet, daß** an oder in dem Bauelement (22) Sensoren, z.B. Temperaturfühler, zur Überwachung des Ladevorganges der Akkumulatoren (14) angeordnet sind.

5. Vorrichtung nach einem der vorhergehenden Ansprüche, **dadurch gekennzeichnet, daß** der Polkontakt (24, 26) vertikal verschiebbar an dem Bauelement (22) befestigt ist.

6. Vorrichtung nach Anspruch 5, **dadurch gekennzeichnet, daß** der Polkontakt (24, 26) mit der Vorspannung einer Feder (48) beaufschlagt ist.

7. Vorrichtung nach einem der vorhergehenden Ansprüche, **dadurch gekennzeichnet, daß** der Polkontakt (24, 26) als zwei oder mehrere Zangenelemente (50) aufweisende Kontaktzange (52) ausgebildet ist.

8. Vorrichtung nach Anspruch 7, **dadurch gekennzeichnet, daß** die Zangenelemente (50) mittels einer Schrägführung (54) am Bauelement (22) geführt sind.

9. Vorrichtung nach Anspruch 8, **dadurch gekennzeichnet, daß** die Schrägführung (54) eine Öffnungsschräge (56) und/oder eine Schließschräge (58) aufweist, so daß die Kontaktzange (52) zwangsgeführt in Abhängigkeit von der insbesondere vertikalen Positionierung des Bauelementes (22) in die Öffnungs- oder Schließstellung überführt wird.

10. Vorrichtung nach einem der vorhergehenden Ansprüche in Kombination mit einem Tragelement (60), wie Palette, Rungenpalette oder Rollband, auf dem die Gruppe (12) von Akkumulatoren (14) positionierbar ist.

11. Vorrichtung nach Anspruch 10, **dadurch gekennzeichnet, daß** das Tragelement (16) Positionierhilfen für die Gruppe (12) von Akkumulatoren (14) aufweist, wobei die Positionierhilfen ggf. mit der Akkumulatorbaugröße variieren.

12. Vorrichtung nach einem der Ansprüche 10 oder 12, **dadurch gekennzeichnet, daß** das Bauelement (22) bspw. über ein Scharnier (26) schwenkbar dem Tragelement (60) angelenkt ist.

13. Vorrichtung nach einem der vorhergehenden Ansprüche 10 bis 12, **dadurch gekennzeichnet, daß** das der Gruppe (12) von Akkumulatoren (14) aufliegende Bauelement (22) mit dem Tragelement (60) über Halteelementen, Verriegelungselemente (62) verbindbar ist.

14. Vorrichtung nach einem der vorhergehenden Ansprüche 10 bis 13, **dadurch gekennzeichnet, daß** das Tragelement (60) vertikale Rahmenteile (64) zum Stapeln mehrerer Tragelemente (60) aufweist, wobei das Bauelement (22) bevorzugt an dem Rahmenteil (64) angelenkt oder mit diesem verriegelt, verspannt oder in ähnlicher Form lösbar befestigt ist.

15. Vorrichtung nach einem der vorhergehenden Ansprüche, **dadurch gekennzeichnet, daß** der Versorgungsanschluß (32) einen Plusanschluß (34) mit einem Minusanschluß (36) aufweist.

## Claims

1. Device (10) for forming a plurality of batteries (14), particularly batteries for motor vehicles, which are combined into a group (12) and positioned on a support element (60) and the poles (16, 18) of which are arranged at an upper casing wall (20), with a flat structural element (22) which is constructed as a plate, frame, grid or strip and at which there are arranged a plurality of pole contacts (24, 26), which correspond with the poles (16) of the batteries (14) and which are positioned in rows and columns at the structural element (22) in the manner of a matrix, wherein the pole contacts (24, 26) are disposed in connection with a central electrical supply terminal (32) of the structural element (22) by way of electrical conductor elements (28, 30) fastened to the structural element (22) and for the forming of the batteries (14) the structural element (22) can be laid or placed with the pole contacts (24, 26) at the poles (16, 18) of the group (12) of batteries (14) for producing a conductive connection between poles contacts (24, 26) and poles (16, 18), **characterised in that** the structural element (22) consists of a frame (38) with transverse struts (40) and/or longitudinal struts (42) arranged thereat and the spacing of the rows and/or columns have such values that the pole contacts (24, 26) are contactable with the poles (16, 18) of battery groups of different constructional size, optionally with modified grouping of the batteries (14).

2. Device according to claim 1, **characterised in that** the structural element (22) comprises one or more degasification elements (44), particularly a textile structure or a semi-permeable membrane, which are, in particular, fastened to the transverse struts (40) or longitudinal struts (42) and which are associated with the filler openings (46) of the batteries (14).

3. Device according to one of the preceding claims, **characterised in that** the structural element (22) comprises a degasification labyrinth for the feedback of condensate.

4. Device according to one of the preceding claims, **characterised in that** sensors, for example temperature detectors, for monitoring the charging process of the batteries (14) are arranged at or in the structural element (22).

5. Device according to one of the preceding claims, **characterised in that** the pole contact (24, 26) is fastened to the structural element (22) to be vertically displaceable.

6. Device according to claim 5, **characterised in that** the pole contact (24, 26) is loaded by the bias of a spring (48).

7. Device according to one of the preceding claims, **characterised in that** the pole contact (24, 26) is constructed as contact tongs (52) having two or more tong elements (50).

8. Device according to claim 7, **characterised in that** the tong elements (50) are guided at the structural element (22) by means of an inclined guide (54).

9. Device according to claim 8, **characterised in that** the inclined guide (54) has an opening chamfer (56) and/or a dosing chamfer (58) so that the contact tongs (52) are transferred to the open or closed setting with positive guidance in dependence on the, in particular, vertical positioning of the structural element (22).

10. Device according to one of the preceding claims in combination with a support element (60), such as a pallet, stacking pallet or rolling belt on which the group (12) of batteries (14) is positionable.

11. Device according to claim 10, **characterised in that** the support element (16) has positioning aids for the group (12) of batteries (14), wherein the positioning aids optionally vary with the battery constructional size.

12. Device according to one of claims 10 and 11, **characterised in that** the structural element (20) is pivotably articulated to the support element (60) by way of, for example, a hinge (26).

13. Device according to one of the preceding claims 10 to 12, **characterised in that** the structural element (22) resting on the group (12) of batteries (14) is connectible with the support element (60) by way of retaining elements, locking elements (62).

14. Device according to one of the preceding claims 10 to 13, **characterised in that** the support element (16) comprises vertical frame members (64) for the stacking of several support elements (60), wherein the structural element (22) is preferably articulated to the frame member (64) or locked, clamped or detachably fastened in similar form therewith.

15. Device according to one of the preceding claims, **characterised in that** the supply terminal (32) has a positive terminal (34) together with a negative terminal (36).

## Revendications

1. Dispositif (10) permettant de former une pluralité d'accumulateurs (14) positionnés sur un élément porteur (60), rassemblés en un groupe (12), en particulier des accumulateurs de véhicules automobiles, dont les pôles (16,18) sont disposés sur une paroi supérieure de boîtier (20) avec un composant (22) plan configuré sous la forme d'une plaque, d'un cadre, d'une grille, d'une baguette, sur lequel sont disposés une pluralité de contacts polaires (24, 26) correspondant aux pôles (16) des accumulateurs (14), lesquels contacts sont positionnés sous la forme d'une matrice en lignes et en colonnes sur le composant (22), moyennant quoi les contacts polaires (24, 26) sont reliés, par l'intermédiaire d'éléments électroconducteurs (28, 30) fixés au composant (22), à une borne d'alimentation (32) électrique centrale du composant (22) et, pour former les accumulateurs (14), le composant (22) avec les contacts polaires (24, 26) peut être placé ou posé sur les pôles (16, 18) du groupe (12) d'accumulateurs (14) pour établir une liaison conductrice entre les contacts polaires (24, 26) et les pôles (16, 18), **caractérisé en ce que** le composant (22) se compose d'un cadre (38) avec des barres transversales (40) et / ou des barres longitudinales (42) disposées sur celui-ci, et la distance entre les lignes et / ou colonnes prend des valeurs telles que les contacts polaires (24, 26) peuvent être mis en contact avec les pôles (16, 18) de groupes d'accumulateurs de dimensions différentes, le cas échéant par un regroupement modifié des accumulateurs ( 14).

2. Dispositif selon la revendication 1, **caractérisé en ce que** le composant (22) présente un ou plusieurs éléments de dégazage (44) fixé(s) en particulier aux barres transversales (40) ou aux barres longitudinales (42), en particulier une structure tissée ou une membrane semi-perméable, qui est assiociée aux orifices de remplissage (46) des accumulateurs (14).

3. Dispositif selon l'une quelconque des revendications précédentes, **caractérisé en ce que** le composant (22) est un labyrinthe de dégazage permettant le recyclage du condensat.

4. Dispositif selon l'une quelconque des revendications précédentes, **caractérisé en ce que**, sur ou dans le composant (22) sont disposés des détecteurs, par exemple des capteurs de température, permettant de surveiller l'état de chargement des accumulateurs (14).

5. Dispositif selon l'une quelconque des revendications précédentes, **caractérisé en ce que** le contact polaire (24, 26) est fixé en pouvant se déplacer verticalement sur le composant (22).

6. Dispositif selon la revendication 5, **caractérisé en ce que** le contact polaire (24, 26) est sollicité par la précontrainte d'un ressort (48).

7. Dispositif selon l'une quelconque des revendications précédentes, **caractérisé en ce que** le contact polaire (24, 26) est configuré sous la forme de deux pinces de contact (52) ou plus présentant deux éléments de pinces (50) ou plus.

8. Dispositif selon la revendication 7, **caractérisé en ce que** les éléments de pinces (50) sont guidés à l'aide d'un guide oblique (54) sur le composant (22).

9. Dispositif selon la revendication 8, **caractérisé en ce que** le guide oblique (54) présente un sens oblique d'ouverture (56) et / ou un sens oblique de fermeture (58), de telle sorte que la pince de contact (52) est acheminée de force, en fonction du positionnement particulièrement vertical du composant (22), dans la position d'ouverture ou de fermeture.

10. Dispositif selon l'une quelconque des revendications précédentes, en combinaison avec un élément porteur (60), tel qu'une palette, une palette à montants ou une bande de roulement, sur laquelle on peut positionner le groupe (12) d'accumulateurs (14).

11. Dispositif selon la revendication 10, **caractérisé en ce que** l'élément porteur (16) présente des aides de positionnement pour le groupe (12) d'accumulateurs (14), moyennant quoi le aides de positionnement varient le cas échéant en fonction des dimensions des accumulateurs.

12. Dispositif selon l'une quelconque des revendications 10 ou 11, **caractérisé en ce que** le composant (22) est articulé sur l'élément porteur (60) de manière pivotante, par exemple à l'aide d'une charnière (26).

13. Dispositif selon l'une quelconque des revendications 10 à 12, **caractérisé en ce que** le composant (22) reposant sur le groupe (12) d'accumulateurs (14) peut être relié à l'élément porteur (60) par l'intermédiaire d'éléments de maintien, d'éléments de blocage (62).

14. Dispositif selon l'une quelconque des revendications 10 à 13, **caractérisé en ce que** l'élément porteur (60) présente des éléments de cadre (64) verticaux pour empiler plusieurs éléments porteurs (60), moyennant quoi le composant (22) est de préférence articulé sur l'élément de cadre (64) ou bloqué, tendu avec celui-ci ou est fixé de manière amovible sous une forme similaire à celui-ci.

15. Dispositif selon l'une quelconque des revendications précédentes, **caractérisé en ce que** la connexion destinée à l'alimentation (32) présente une borne positive (34) et une borne négative (36).
